# EUROPÄISCHE PATENTANMELDUNG

(11) **EP 1 023 923 A1**
(43) Veröffentlichungstag der Anmeldung: **02.08.2000**
(21) Anmeldenummer: 99123765.2
(22) Anmeldetag: 30.11.1999
(51) Int. Cl.: A62C 27/00, B62D 33/04

(54) **Aufbau für ein Fahrzeug**

(30) Priorität: 30.01.1999 DE 19903742
(71) Anmelder: Metz Feuerwehrtechnik GmbH & Co. KG, 76185 Karlsruhe (DE)
(72) Erfinder: Bruder, Detlef, 76199 Karlsruhe (DE)
(74) Vertreter: Lempert, Jost, Dipl.-Phys. Dr. rer.nat.

(57) **Zusammenfassung**

Ein Aufbau für ein Fahrzeug, insbesondere ein Einsatzfahrzeug, mit einer Bodengruppe (13) und einem Aufbaugerippe (12) sowie mit einem auf der Bodengruppe (13) befestigten stabilen Hohlkörper (1), wie einem Wassertank, zeichnet sich dadurch aus, daß der Hohlkörper (1) zur Aussteifung des Aufbaugerippes (12) fest mit diesem verbunden ist. Somit wirkt der Hohlkörper (1) an dem Aufbaugerippe (12) angreifenden Scher- und Torsionskräften wie sie bei einem Fahrzeug während der Fahrt auftreten, aufgrund seiner Eigenstabilität entgegen.

## Beschreibung

Die Erfindung betrifft einen Aufbau für ein Fahrzeug, insbesondere ein Einsatzfahrzeug, mit einer Bodengruppe und einem Aufbaugerippe sowie mit einem auf der Bodengruppe befestigten stabilen Hohlkörper, wie einem Wassertank.

Derartige Aufbauten für Fahrzeuge müssen eine ausreichende Torsions- und Scherstabilität aufweisen und werden bei herkömmlichen Kastenfahrzeugen in der Regel durch ein äußeres Stab- und Gitterwerk gebildet, das darüber hinaus Diagonalverstrebungen aufweist. Durch ein solches äußeres Stabwerk ist ein hinreichend stabiler Aufbau erzielbar. Es sind weiterhin Aufbauten für Fahrzeuge bekannt, deren' Innenräume seitlich leicht zugänglich sein müssen, wie insbesondere Einsatzfahrzeuge mit einem mit Rolläden versehenen Kastenaufbau. Hierbei können die Außenwände keinerlei Stabilitäts- und Aussteifungsfunktionen übernehmen, so daß ein inneres Stabwerk oder inneres Gerippe vorzusehen ist, dessen Torsions- und Scherstabilität aufgrund der Nähe der das Stabwerk aufweisenden Längsebenen geringer ist als bei einem äußeren Stabwerk. Darüberhinaus sind die zur Erzielung einer hohen und zuverlässigen Scher- und insbesondere Torsionssteifigkeit erforderlichen Querdiagonalen störend, da sie die Nutzung des Innenraumes einschränken. Schließlich wird bei Fahrzeugen mit einem derartigen Aufbau ein leichter Aufbau angestrebt, um auch bei einer hohen, aufgrund des Volumens möglichen Zuladung mit technischen Einrichtungen das gesamte Fahrzeuggewicht gering zu halten, um auch erhöhte Anforderungen hinsichtlich der Qualifikation des Fahrzeugführers zu vermeiden.

Der Erfindung liegt daher die Aufgabe zugrunde, einen Aufbau für ein Fahrzeug der eingangs genannten Art zu schaffen, der unter Vermeidung der vorgenannten Nachteile bei geringem Gewicht eine hohe Aussteifung und damit eine hohe Stabilität, insbesondere gegen Scher- und Torsionskräfte aufweist.

Erfindungsgemäß wird die genannte Aufgabe mit einem gattungsgemäßen Aufbau für ein Fahrzeug dadurch gelöst, daß der Hohlkörper zur Aussteifung des Aufbaugerippes fest mit diesem verbunden ist.

Die Erfindung sieht also die Einbindung eines in einem solchen Fahrzeug, insbesondere einem Feuerwehreinsatzfahrzeug, vorhandenen stabilen Hohlkörpers, wie eines Wassertanks, der bisher lediglich auf der Bodengruppe aufsaß und mit dieser befestigt war, zur Aussteifung des Aufbaus vor. Dadurch, daß ein solcher stabiler Hohlkörper, wie ein Wassertank, der in der Regel ohnehin vorhanden ist, sowohl Längs-, als auch Quer-, als auch Diagonalkräfte aufnehmen kann, kann er, bei Einbindung in den Gerippeaufbau, entsprechende, auf diesen einwirkende Kräfte aufnehmen und damit eine Aussteifung desselben sowie die Stabilität, insbesondere hinsichtlich Scher- und Torsionskräften bewirken. Der stabile Hohlkörper übernimmt dabei praktisch die Aufgabe einer einen solchen gerippeartigen Quader aussteifenden Raumdiagonale.

In konkreter, bevorzugter Ausgestaltung ist dabei vorgesehen, daß der Hohlkörper an seinen gegenüberliegenden Seitenwänden fest mit eine vertikale Komponente aufweisenden Trägern des Aufbaugerippes verbunden ist. Durch diese Ausgestaltung kann der stabile Hohlkörper, der fest mit einem Träger des Aufbaugerippes und damit mit diesem verbunden ist, Kräfte von einer Seite auf die andere Seite überleiten. Eine besonders zuverlässige Aussteifung wird erreicht, wenn die mit dem Hohlkörper verbundenen Träger schräg angeordnet sind. In weiterer Ausgestaltung kann dabei vorgesehen sein, daß der Hohlkörper über eine Verstärkung mit dem Aufbaugerippe fest verbunden ist, wobei entweder der Hohlkörper mit dem Aufbaugerippe verschweißt oder der Hohlkörper mit dem Aufbaugerippe durch eine Verschraubung fest verbunden ist.

Um bei einem erfindungsgemäß ausgestalteten Aufbau für ein Fahrzeug, entweder durch Verschweißen oder Verschrauben, eine modulartige Ausgestaltung zu ermöglichen und insbesondere je nach Einsatzzweck des konkreten Aufbaus die Ausstattung mit verschieden großen Hohlkörpern - Wassertanks - zu ermöglichen, sieht eine äußerst bevorzugte Weiterbildung der Erfindung vor, daß die Träger an ihren Enden in horizontalen Querstreben feststellbar geführt sind.

Hierdurch wird es möglich, trotz der festen Verbindung des stabilen Hohlkörpers im erstellten Aufbau verschieden große, insbesondere verschieden breite Hohlkörper einzusetzen. Die Hohlkörper werden hierbei auf der Bodengruppe eingesetzt und mit dieser fest verbunden. Anschließend werden die mit den Hohlkörpern zu verbindenden Träger entlang der Horizontalstreben gegen diese verschoben, mit den Hohlkörpern fest verbunden und ebenfalls an den führenden Horizontalstreben fixiert. Um dies in einfacher Weise zu ermöglichen, ist in einer Weiterbildung vorgesehen, daß die Querstreben Querprofile sind, wobei insbesondere die Träger in den Querprofilen z. B. über Hammerbolzen festlegbar sind.

Zur weiteren Aussteifung des erfindungsgemäßen Aufbaus ist in einer bevorzugten Ausgestaltung vorgesehen, daß die mit dem Hohlkörper verbundenen Träger sowie weitere Träger mit vertikaler Erstreckungskomponente mit ihren unteren Enden in einen gemeinsamen Punkt einer horizontalen Querstrebe einlaufen, wobei ein solcher weiterer Träger einen endlichen Winkel mit einem mit dem Hohlkörper verbundenen Träger einschließt.

Um dem durch die Verwendung des stabilen Hohlkörpers als Aussteifung des Aufbaugerippes Rechnung tragenden Gedanken der Begrenzung des Gewichtes und der Sicherstellung eines stabilen und steifen Aufbaus weiterhin Genüge zu tun, sind in bevorzugter Ausführung in Flächenbereichen des Gerippes statt einer Vielzahl von rahmenartig angeordneten Streben eine Fläche umschließende Streben des Aufbaugerippes aussteifende formstabile Platten vorgesehen, wobei insbesondere die formstabilen Platten Sandwichplatten sind. Eine derartige Sandwichplatte ist in der Regel dadurch ausgestaltet, daß sie aus äußeren Metallbeplankungen besteht, deren Zwischenraum mit Leichtmaterial ausgefüllt ist.

Die Bodengruppe kann in herkömmlicher Weise aus Stahl bestehen, bzw. - im Falle einer aus einem Gerippe bestehenden Bodengruppe - Stahlstreben aufweisen. Im Gegensatz hierzu bestehen die Streben und Träger des Aufbaugerippes aus Gewichtsgründen vorzugsweise aus Aluminium. Die formstabilen Platten sind insbesondere in Stirnwänden, wie insbesondere in vorderen und rückwärtigen Stirnwänden des Aufbaus vorgesehen, wobei sie zumindest in der rückwärtigen Stirnwand vorzugsweise eine Zugangsöffnung zum Inneren rahmenartig umschließen. Derartige formstabile sandwichartige, das Aufbaugerippe aussteifende Platten weisen darüberhinaus den Vorteil auf, daß sie zur Befestigung an Halterungen dienen können, ohne daß hierzu zusätzliche Maßnahmen, wie insbesondere Querstreben vorgesehen sein müssen.

Das Aufbaugerippe kann beispielsweise dachseitig ein mit im wesentlichen horizontalen Längs- und Querstreben, insbesondere Aluminiumstreben, versehenes Tragwerk aufweisen, welches das Aufbaugerippe zusätzlich versteift und welches in zumindest einigen Zwischenräumen zwischen den horizontalen Längs- und Querstreben mit Blechplatten ausgefüllt sein kann, um eine sichere Begehbarkeit des erfindungsgemäßen Aufbaus zu gewährleisten. Alternativ kann der Dachaufbau wie auch die Stirnwände mit Sandwichplatten realisiert sein.

Nachstehend ist die Erfindung anhand einer bevorzugten Ausführungsform unter Bezugnahme auf die Zeichnungen näher erläutert. Es zeigen:
- Fig. 1:: eine perspektivische Ansicht einer Ausführungsform eines erfindungsgemäßen Aufbaus für ein Fahrzeug;
- Fig. 2:: eine perspektivische Ansicht einer Bodengruppe eines Aufbaus gemäß der Fig. 1 und
- Fig. 3:: eine Detailansicht einer Verbindung von mit einem Hohlkörper verbindbaren Trägern mit einer auf einer Bodengruppe angeordneten horizontalen Querstrebe.

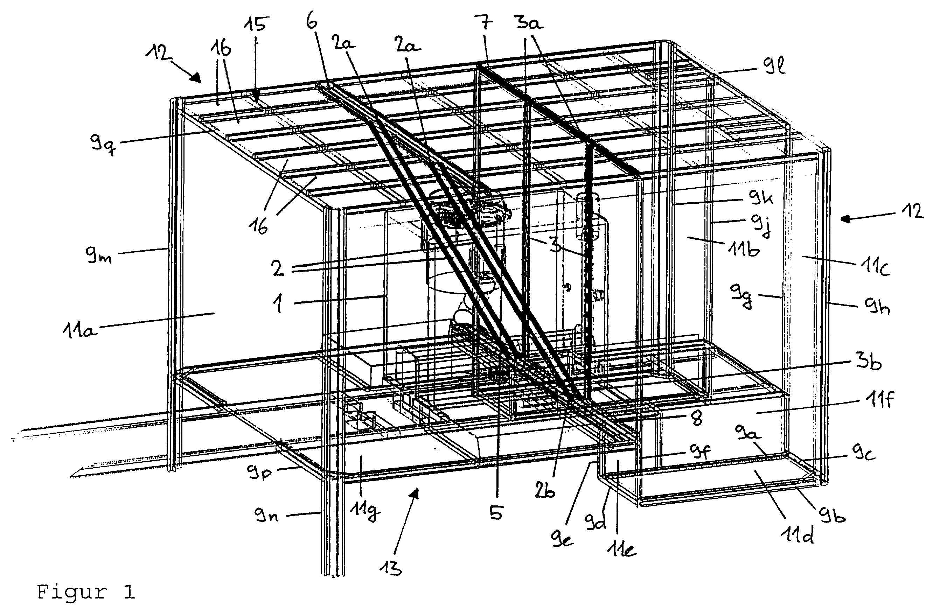

Der in Fig. 1 dargestellte Aufbau für ein Einsatzfahrzeug, wie z.B. ein Feuerwehrfahrzeug, weist einen auf einer Bodengruppe 13 befestigten, stabilen Hohlkörper 1 in Form eines Wassertanks auf. Auf der Bodengruppe 13 ist ein vorzugsweise überwiegend aus Aluminium bestehendes Aufbaugerippe 12 angeordnet, mit dem der Hohlkörper 1 an dessen Seitenflächen über schräg angeordnete Träger 2 verbunden, z.B. an einer Verstärkung 5 verschraubt, verschweißt oder dgl. ist. Die mit dem Hohlkörper 1 verbundenen Träger 2 sind an ihren Enden 2a, 2b jeweils feststellbar in horizontalen Querstreben 6, 8 geführt, wobei an der Querstrebe 8 ein weiterer im wesentlichen vertikaler Träger 3 mit seinem unteren Ende 3b feststellbar ist. Die Träger 2, 3 schließen einen endlichen Winkel ein. Der Träger 3 ist an seinem oberen Ende 3a ebenfalls feststellbar in einer horizontalen Querstrebe 7 geführt. Die seitliche Verstellbarkeit der Träger 2, 3 entlang der Querstreben 6, 7, 8 ermöglicht insbesondere die Bestükkung eines derartigen Aufbaus mit Hohlkörpern 1 verschiedener Größe.

Sowohl am Aufbaugerippe 12 als auch an der Bodengruppe 13 des Aufbaus sind Flächen umschließende Streben 9a-q aussteifende formstabile Platten 11a-f, insbesondere Sandwichplatten vorgesehen, wobei letztgenannte bei der gezeigten Ausführungsform die vordere und rückwärtige Stirnwand des Aufbaugerippes 12 versteifen, wobei in der rückwärtigen Stirnwand eine Zugangsöffnung zum Inneren des Aufbaugerippes 12 ausgespart ist. Dachseitig besteht das Aufbaugerippe 12 aus einem horizontale Längs- und Querstreben aufweisenden Tragwerk 15, welches das Aufbaugerippe zusätzlich versteift und welches in zumindest einigen Zwischenräumen zwischen den horizontalen Längs- und Querstreben mit Blechplatten ausgefüllt ist, die für eine sichere Begehbarkeit des Aufbaus sorgen.

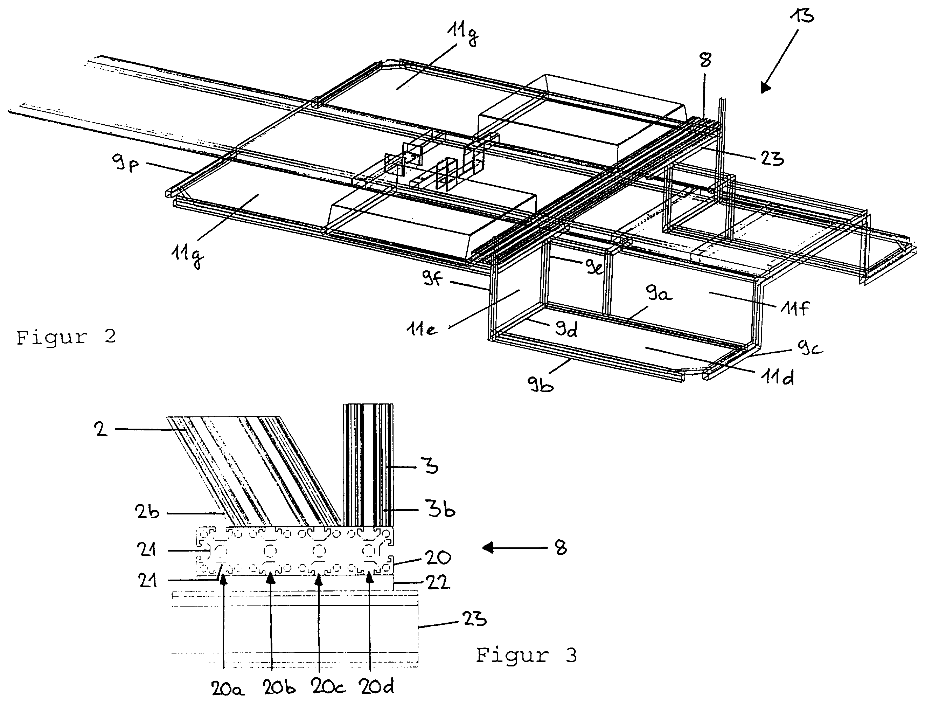

Die Bodengruppe 13 des Aufbaus besteht aus einem Stahlstreben aufweisenden Gerippe (vgl. Fig. 2) und ist ebenfalls mit zwischen einigen Stahlstreben 9a-f angeordneten Sandwichplatten 11d-g verstärkt. Die Querstrebe 8 zur Befestigung der Träger 2, 3 (vgl. Fig. 1) ist fest mit einer Stahlstrebe 23 der Bodengruppe 13 verbunden.

In Fig. 3 ist die Verbindung der mit dem Hohlkörper 1 verbindbaren Träger 2 bzw. der im wesentlichen vertikalen Träger 3 mit der auf der Stahlstrebe 23 der Bodengruppe 13 angeordneten Querstrebe 8 in einer Detailansicht veranschaulicht. Die aus einem Aluminiumprofil 20 bestehende Querstrebe 8 ist mittels einer Schweißverbindung 22 fest mit der Stahlstrebe 23 verbunden. Die Träger 2, 3 sind an ihren unteren Enden 2b, 3b mittels (nicht dargestellten) Hammerbolzen am Profil 20 festgelegt, wobei die Hammerbolzen lösbar in Nuten 21 des Aluminiumprofils 20 eingreifen. In der dargestellten Ausführungsform besteht das Aluminiumprofil 20 aus vier Profilelementen 20a-20d, wobei die endständigen Profilelemente 20a, 20d drei und die mittleren Profilelemente 20b, 20c zwei Nuten 21 aufweisen. Selbstverständlich kann das Aluminiumprofil 20 auch aus mehr oder weniger Profilelementen bestehen, welche jeweils bis zu vier Nuten oder auch jeweils nur eine Nut zum Festlegen der Träger 2, 3 aufweisen können.

## Patentansprüche

1. Aufbau für ein Fahrzeug, insbesondere ein Einsatzfahrzeug, mit einer Bodengruppe und einem Aufbaugerippe sowie mit einem auf der Bodengruppe befestigten stabilen Hohlkörper, wie einem Wassertank, dadurch gekennzeichnet, daß der Hohlkörper (1) zur Aussteifung des Aufbaugerippes (12) fest mit diesem verbunden ist.

2. Aufbau nach Anspruch 1, dadurch gekennzeichnet, daß der Hohlkörper (1) an seinen gegenüberliegenden Seitenwänden fest mit eine vertikale Komponente aufweisenden Trägern (2) des Aufbaugerippes (12) verbunden ist.

3. Aufbau nach Anspruch 1 oder 2, dadurch gekennzeichnet, daß der Hohlkörper (1) über eine Verstärkung (5) mit dem Aufbaugerippe fest verbunden ist.

4. Aufbau nach einem der vorangehenden Ansprüche, dadurch gekennzeichnet, daß der Hohlkörper (1) mit dem Aufbaugerippe (12) verschweißt ist.

5. Aufbau nach einem der Ansprüche 1 bis 3, dadurch gekennzeichnet, daß der Hohlkörper (1) mit dem Aufbaugerippe (12) durch eine Verschraubung fest verbunden ist.

6. Aufbau nach einem der Ansprüche 2 bis 5, dadurch gekennzeichnet, daß die Träger (2) schräg angeordnet sind.

7. Aufbau nach einem der Ansprüche 2 bis 6, dadurch gekennzeichnet, daß die Träger (2) an ihren Enden (2a,2b) in horizontalen Querstreben (6,8) feststellbar geführt sind.

8. Aufbau nach Anspruch 7, dadurch gekennzeichnet, daß die Querstreben (6,7) Querprofile (20) sind.

9. Aufbau nach Anspruch 8, dadurch gekennzeichnet, daß die Träger (2) in den Querprofilen (20) über Hammerbolzen festlegbar sind.

10. Aufbau nach einem der Ansprüche 2 bis 10, dadurch gekennzeichnet, daß die mit dem Hohlkörper (1) verbundenen Träger (2) sowie weitere Träger (3) mit vertikaler Erstreckungskomponente mit ihren unteren Enden (2b,3b) in einen gemeinsamen Punkt einer horizontalen Querstrebe (8) einlaufen, wobei ein solcher weiterer Träger (3) einen endlichen Winkel mit einem mit dem Hohlkörper (1) verbundenen Träger (2) einschließt.

11. Aufbau nach einem der vorangehenden Ansprüche, gekennzeichnet durch eine Fläche umschließende Streben (9a-q)) des Aufbaugerippes (12) aussteifende formstabile Platten (11a-f).

12. Aufbau nach Anspruch 11, dadurch gekennzeichnet, daß die formstabilen Platten (lla-f) Sandwichplatten sind.

13. Aufbau nach Anspruch 12, dadurch gekennzeichnet, daß die Sandwichplatten (lla-q) aus äußeren Metallbeplankungen bestehen, deren Zwischenraum mit Leichtmaterial ausgefüllt ist.

14. Aufbau nach einem der vorangehenden Ansprüche, dadurch gekennzeichnet, daß die Bodengruppe (13) Stahlstreben aufweist.

15. Aufbau nach einem der vorangehenden Ansprüche, dadurch gekennzeichnet, daß das Aufbaugerippe (12) Aluminiumstreben aufweist.
